# EUROPEAN PATENT SPECIFICATION

(11) **EP 1 749 706 B1**
(45) Date of publication and mention of the grant of the patent: **08.09.2010**
(21) Application number: 06014156.1
(22) Date of filing: 07.07.2006
(51) Int. Cl.: B60R 21/20

(54) **Steering wheel with airbag apparatus**
Lenkrad mit AIrbag-Vorrichtung
Volant comportant un dispositif de coussin gonflable

(30) Priority: 05.08.2005 JP 2005228355
(43) Date of publication of application: 07.02.2007
(73) Proprietor: TAKATA CORPORATION, Minato-ku, Tokyo 106-8510 (JP)
(72) Inventor: Onohara, Keisuke, Tokyo 106-8510 (JP)
(74) Representative: Vossius & Partner

(56) References cited:
- EP-A- 1 043 198
- JP-A- 6 312 643
- US-A- 3 843 152
- US-A- 6 164 690

## Description

The present invention relates to steering wheels of vehicles, and in particular, to a steering wheel with an airbag apparatus having an airbag apparatus for restraining an occupant almost in the center.

EP 1 043 198 A2 relates to a steering wheel for motor vehicles, the steering wheel comprising a steering wheel axis, a skeleton surrounded by a foam casing, and an airbag module. The airbag module has a generator support connected to the skeleton and a covering cap fastened to the generator support. The covering cap is designed as an actuating device for generating a horn signal. At least two recesses are provided in the foam casing of the steering wheel skeleton and on the generator support insert pins are provided corresponding to the recesses.

US 3,843,152 relates to an impact energy absorbing apparatus including an energy absorbing bag confined within a steering wheel assembly of a vehicle and inflatable by pressurized fluid from an external pressure source when a collision occurs. The steering wheel assembly is provided at the base portion thereof with a cylindrical aperture coaxial with a steering shaft of the vehicle. The impact energy absorbing apparatus is positioned inside the aperture. A cover is detachably mounted on the steering wheel assembly over the energy absorbing apparatus and will be removed from the steering wheel assembly when the impact energy absorbing apparatus is inflated.

Steering wheels with airbag apparatuss having an airbag apparatus almost in the center sometimes have a cover for preventing the interior of the airbag apparatus from being viewed through the gap between a module cover of the airbag apparatus and spokes of the steering wheel.

Attached Fig. 4 is a perspective view of a module cover shown in Fig. 3 of JP-A-2000-25548 (Patent Document 1). The module cover 60 has a downward portion 62 projected from a lower spoke engaging portion 61 which points down (so called six o'clock position) when the steering wheel is in the position at which a vehicle drives straight ahead. The downward portion 62 functions as a concealer for preventing the interior of the airbag apparatus from being viewed.

JP-A-2003-118526 (Patent Document 2) describes an improvement in appearance by mounting a cover separated from a module cover to the side of the module cover.

The airbag apparatus disclosed in JP-A-2000-25548 is of a type in which the upper surface of the module cover connects to the upper surface of the spoke. The concealing structure cannot be applied to a type in which an airbag apparatus projects from the spoke toward the occupant without a cover as in JP-A-2003-118526.

With the airbag apparatus of JP-A-2003-118526, a separate cover is mounted around the outer periphery of a module cover. This takes much time and labor for assembly and lacks in sense of unity of the cover and the module cover, thus having no good appearance.

Accordingly, it is an object of the present invention to provide a steering wheel with an airbag apparatus in which the interior of the airbag apparatus is prevented from being viewed through the gap between a module cover and a spoke even if the module cover is disposed in such a manner as to project from the spoke, and which is easy to manufacture.

A steering wheel with an airbag apparatus according to the present invention (Claim 1) is characterized in that the airbag apparatus is disposed substantially in the center of the steering wheel having spokes; the outer periphery of a module cover of the airbag apparatus covers the spokes; and a concealer for concealing the interior of the airbag apparatus is provided at the gap between the outer periphery of the module cover and the surface of the spoke adjacent to an occupant, wherein the concealer is constructed of a projecting strip provided at the surface of the spoke adjacent to the occupant and the outer rim of the module cover disposed close to the side of the projecting strip adjacent to the outer periphery of the steering wheel.

The steering wheel with an airbag apparatus of Claim 2 is characterized in that, in Claim 1, the concealer is disposed at the gap between a downward spoke of the steering wheel and the module cover when the steering wheel is in the position at which a vehicle drives straight ahead.

### [Advantages of the Invention]

The steering wheel with an airbag according to the invention has a concealer constructed of a projecting strip disposed on the occupant side of the spokes and the outer rim of the module cover disposed close to the side of the projecting strip adjacent to the outer periphery of the module cover. The concealer reliably prevents the interior of the airbag apparatus from being viewed. This structure eliminates the need for mounting a separate blind cover to the module cover, facilitating manufacture, and providing good appearance.

A horn switch disposed at the spokes or the vicinity thereof can be prevented from being viewed.

It is particularly preferable to dispose the concealer at the spoke at so called a six o'clock position. This structure prevents the interior of the airbag apparatus from being viewed even when a spoke in a six o'clock position comes to a three o'clock or nine o'clock position by turning the steering wheel at about 90 degrees.

An embodiment of the present invention will be described hereinbelow with reference to the drawings.
Fig. 1 is a perspective view of a steering wheel with an airbag apparatus according to an embodiment of the invention;
Fig. 2 is a longitudinal sectional view of the steering wheel with an airbag apparatus taken along line II-II of Fig. 1;
Fig. 3 is an exploded perspective view of the steering wheel with an airbag apparatus of Fig. 1; and

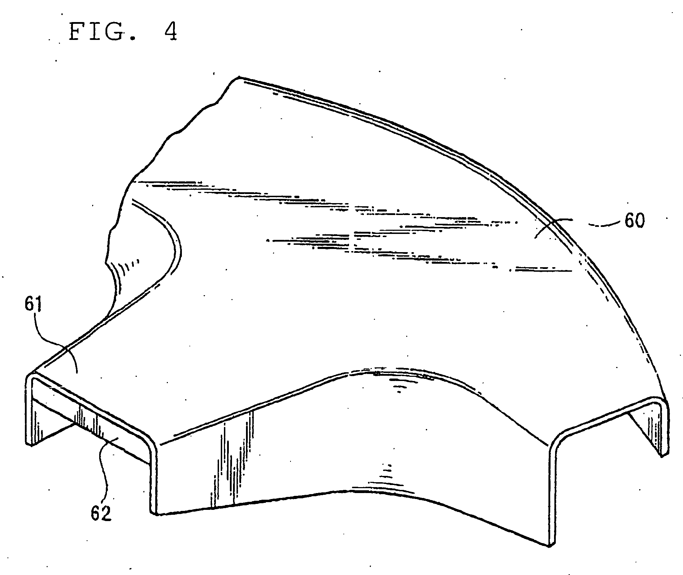

Fig. 4 is a perspective view of a module cover according to a related art.

The vertical direction and the lateral direction in the following description indicate those in a steering wheel plane when viewed from the occupant, with the steering wheel in a position in which the vehicle is driving straight ahead. The front-back positions indicate the directions toward the occupant and the steering wheel.

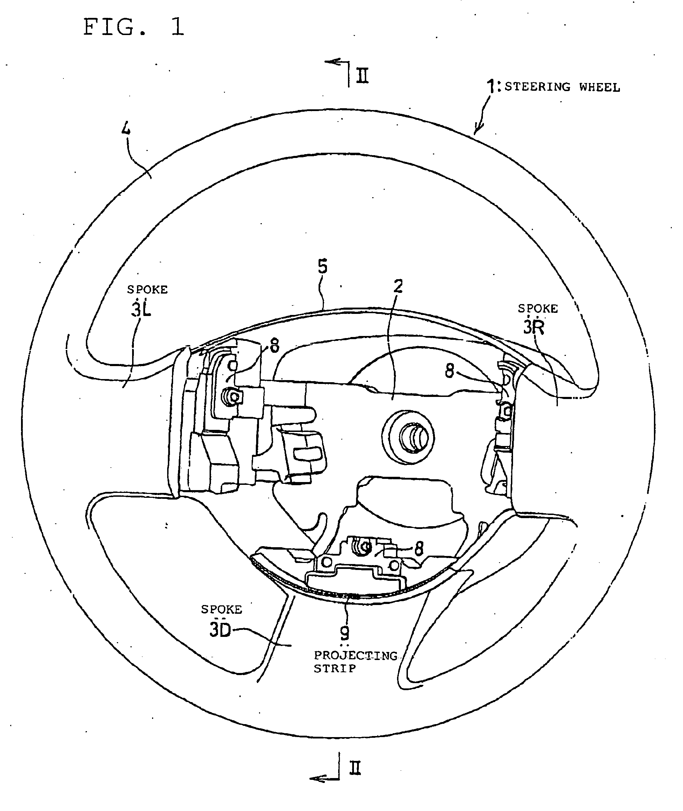

A steering wheel 1 in the embodiment of Figs. 1 to 3 is of what is called a three-spoke type, in which spokes 3L, 3R, and 3D extend from a central steering base 2 in three directions, to the right and left (in the directions of so called three o'clock and nine o'clock) and downward (in the direction of six o'clock), and the distal ends of the spokes 3L, 3R, and 3D connect to a ring 4 around the outer periphery of the steering wheel 1. The steering base 2 is joined to the distal end of a steering shaft (not shown). A back cover 5 is mounted in such a manner as to cover the steering base 2 from the back (from the side opposite to the occupant).

An airbag apparatus 10 is mounted on the front of the steering base 2 (on the side adjacent to the occupant). The airbag apparatus 10 of this embodiment is mounted to the steering base 2 in such a manner as to move in the front-back direction (toward and away therefrom) so that when a module cover 20 of the airbag apparatus 10 is pushed to move the airbag apparatus 10 back to the steering base 2, a horn switch is turned on to blow a horn.

In this embodiment, a base plate 6 that configures a horn switch is disposed in front of the steering base 2. The airbag apparatus 10 is joined to the base plate 6 with a guide shaft 41. Between the base plate 6 and the airbag apparatus 10, a coil spring 40 is disposed which biases the airbag apparatus 10 away from the base plate 6. The joint structure of the airbag apparatus 10 to the steering wheel 1 and the structure of the horn switch will be specifically described hereinlater.

The airbag apparatus 10 includes a retainer 11, an airbag 13 mounted to the retainer 11 with an airbag mounting ring 12, an inflator 14 for inflating the airbag 13, and the synthetic-resin module cover 20 that covers the airbag 13 in folded state. The module cover 20 is constructed to be torn open when the airbag 13 inflates.

The retainer 11 has a main plate 11a disposed in front of the steering base 2. The main plate 11a has an opening 11b for the inflator 14 to be inserted. Around the opening 11b, insertion holes (the reference numerals are omitted) for stud bolts 12a are provided which stand from the airbag mounting ring 12.

In mounting the airbag 13 and the inflator 14 to the retainer 11, the periphery of an inflator insertion hole (the reference numeral is omitted) on the proximal end of the airbag 13 is placed on the periphery of the inflator opening 11b of the main plate 11a from the front, which are then retained with the airbag mounting ring 12. At that time, the stud bolts 12a of the airbag mounting ring 12 are inserted into bolt insertion holes (not shown) provided around the inflator insertion hole and the bolt insertion holes of the main plate 11a.

The distal end of the inflator 14 is inserted from the back into the inflator opening 11b, and a flange 14a provided around the side periphery is placed on the periphery of the inflator opening 11b. At that time, the stud bolts 12a are also inserted into bolt insertion holes (the reference numeral is omitted) of the flange 14a. Nuts (not shown) are tightened to the stud bolts 12a, thereby fixing the airbag 13, the airbag mounting ring 12, and the inflator 14 to the main plate 11a.

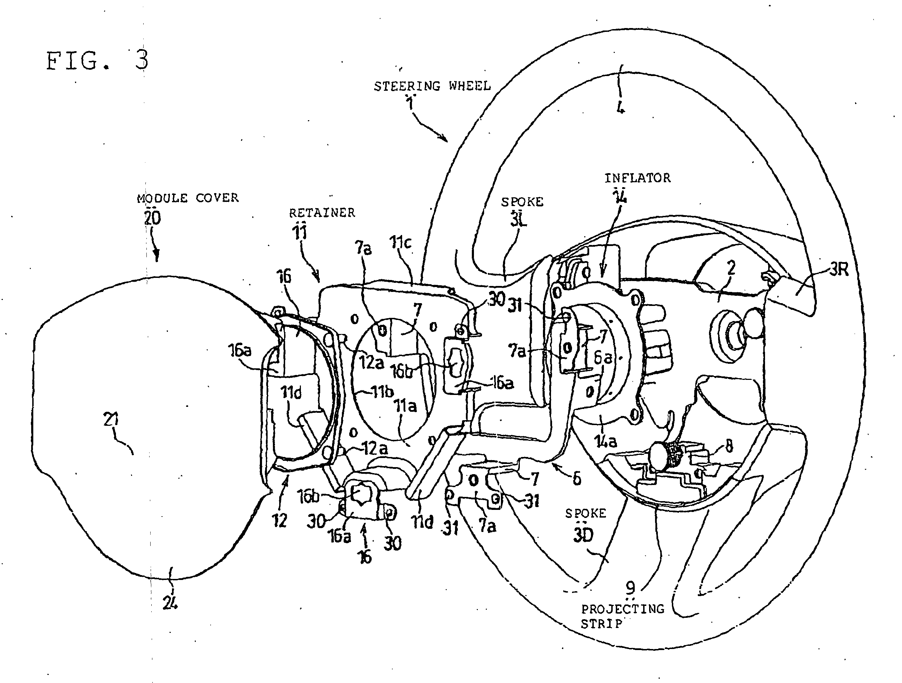

Module cover mounting pieces 11c, 11d, and 11d for fixing the module cover 20 to the retainer 11 project from the outer rim of the main plate 11a (in this embodiment, the upper rim and the lower right and left rims). As shown in Fig. 3, the mounting piece 11c at the upper rim of the main plate 11a stands erect to the back of the main plate 11a, while the mounting pieces 11d and 11d at the lower right and left rims stand erect to the front of the main plate 11a.

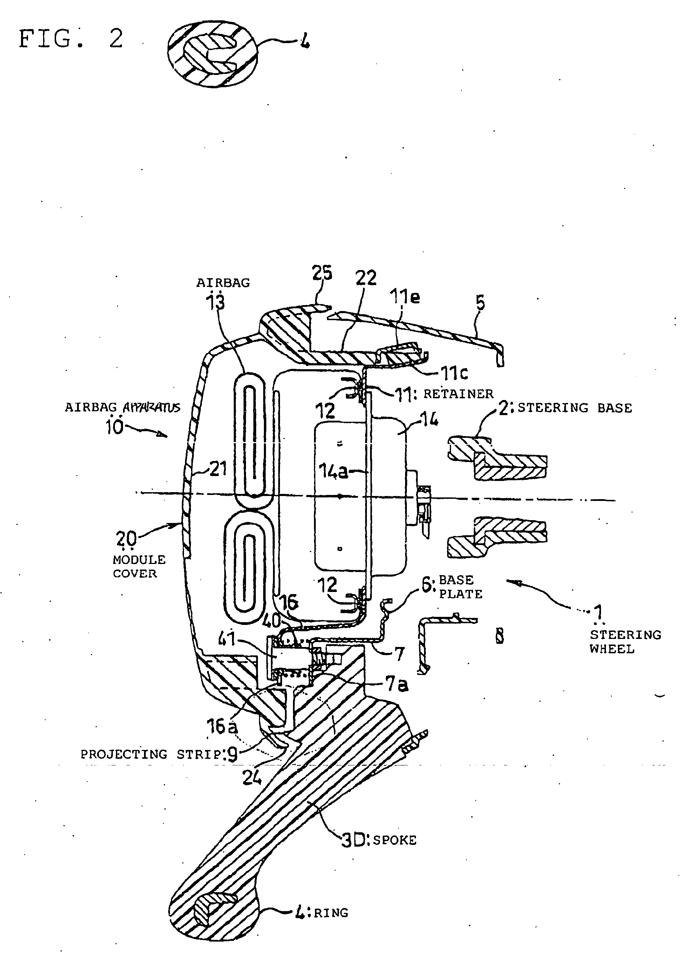

The module cover 20 has a main surface 21 covering the front of the retainer 11 and a leg-like piece 22 standing erect from the back of the main surface 21. The leg-like piece 22 is secured to the mounting pieces 11c, 11d, and 11d with fasteners 11e (see Fig. 2) or the like. The outer periphery of the main surface 21 extends to the side of the airbag apparatus 10 relative to the leg-like piece 22, and covers the proximal ends of the spokes 3L, 3R, and 3D.

As shown in Fig. 2, the outer surface of the lower spoke 3D adjacent to the occupant forms a receding slope withdrawing from the occupant at the center of the steering wheel 1. The part adjacent to a steering column relative to the receding slope forms a radial surface substantially perpendicular to the axis of the steering column. The lower rim 24 of the main surface 21 faces the radial surface with a specified space therebetween. The portion of the radial surface adjacent to the receding slope has a projecting strip 9 that constructs a half of the concealer.

As shown in Figs. 1 and 3, the projecting strip 9 extends substantially in arc shape with almost the same radius along the steering column.

As shown in Fig. 2, the lower rim (outer rim) 24 of the module cover 20 which covers the spoke 3D is located outside the projecting strip 9, or in the vicinity of the outer periphery of the projecting strip 9. The lower rim 24 constructs the other half of the concealer. The lower end of the lower rim 24 (the end parallel to the axis of the steering column, the right end in Fig. 2) is located lower than the upper rim of the projecting strip 9 (on the right in Fig. 2).

In the case of the steering wheel 1 with the airbag apparatus 10, the interior of the airbag apparatus 10 is covered with the concealer constructed of the projecting strip 9 uprising from the occupant-side surface of the lower spoke 3D and the lower rim 24 of the module cover 20. This structure prevents the interior of the airbag apparatus 10 from being viewed even if the steering wheel 1 is turned until the spoke 3D comes to so called three or nine o'clock position.

This structure eliminates the need for mounting a separate blind cover to the module cover 20, facilitating manufacture, and providing good appearance.

The joint structure of the retainer 11 of the airbag apparatus 10 and the base plate 6 and the structure of the horn switch will be schematically described.

In this embodiment, a horn-switch-contact retaining piece 16 stands erect from each of the right and left opposite rims and the lower rim of the main plate 11a of the retainer 11. The contact retaining pieces 16 project from the main plate 11a toward the occupant, from the ends of which extensions 16a extend to the side of the airbag apparatus 10 (in the direction substantially orthogonal to the front back direction of the airbag apparatus 10).

One contact 30 of the horn switch is provided on the back of each extension 16a. The extension 16a has an opening 16b for the guide shaft 41 that guides the front back movement of the airbag apparatus 10 to pass through.

The base plate 6 is disposed on the back of the main plate 11a. As shown in Fig. 3, the base plate 6 of this embodiment has substantially a U shape in plan view, and is disposed along the right and left sides and the lower side of the main plate 11a. Airbag apparatus support pieces 7 stand erect from the both ends and the middle (the lateral center of the portion along the lower side of the main plate 11a) of the base plate 6 in the position where they overlap the contact retaining pieces 16 of the main plate 11a.

At the end of each support piece 7, an opposing portion 7a is provided which faces the back of the extension 16a of each contact retaining piece 16. The opposing portion 7a has a contact 31 opposed to the contact 30 of the extension 16a. To the opposing portion 7a, a guide-shaft mounting nut (the reference numeral is omitted) is fixed.

As shown in Fig. 2, the guide shaft 41 is fixed to the opposing portion 7a such that the proximal end is screwed into the nut of the opposing portion 7a, and projects from the opposing portion 7a toward the occupant. The guide shaft 41 passes through the front opening 16b of the extension 16a via an insulating spacer (the reference numeral is omitted). At the end of the guide shaft 41 is provided a flange (the reference numeral is omitted) as a stopper.

The coil spring 40 is disposed around the guide shaft 41 while holding power between the extension 16a and the opposing portion 7a.

In this embodiment, in mounting the airbag apparatus 10 to the steering base 2, the base plate 6 that is joined to the retainer 11 in advance is superposed on the front surface of the steering base 2, and a leg-like piece 6a is fixed to the steering base 2 with bolts or rivets (not shown).

In this embodiment, when the base plate 6 is joined to the steering base 2, the opposing portions 7a overlap with the bases of the spokes 3L, 3R, and 3D. As shown in the drawing, mounts 8 for supporting the opposing portions 7a are provided at the bases of the spokes 3L, 3R, and 3D. The opposing portions 7a come into engagement with the mounts 8.

The horn blowing operation of the steering wheel 1 with the airbag apparatus 10 is as follows.

When the module cover 20 is depressed, the module cover 20 and the retainer 11 (the entire airbag apparatus 10) retract together. Since the base plate 6 is integrated with the steering wheel 1, the base plate 6 is not retracted even when the module cover 20 is depressed. Thus the contacts 30 and 31 retained by the retainer 11 and the base plate 6, respectively, come close into contact with each other to energize the horn (not shown), thereby blowing the horn.

On release of the module cover 20, the retainer 11 is pushed back toward the occupant by the pressure of the coil spring 40 to return to the normal position in Fig. 2. Thus the contacts 30 and 31 are separated to stop the blowing.

It is to be understood that the above-described embodiment is merely an example of the invention, and the invention is not limited to the embodiments.

For example, the embodiment has a structure in which when the module cover is depressed, the entire airbag apparatus is retracted to blow the horn. However, the invention can also be applied to a type in which when a module cover is depressed, only the module cover is retracted to blow the horn.

Although the embodiment is of the three-spoke type, the number of spokes is not limited to three. The concealer that is a combination of a projecting strip and the outer rim of the module cover may be disposed to any spoke.

## Claims

1. A steering wheel device comprising:
a steering wheel (1) with a plurality of spokes (3L, 3R, 3D);
an airbag apparatus (10) disposed substantially central to the steering wheel and including an interior and a module cover (20), said module cover comprising a main surface (21), an outer periphery disposed around the main surface (21) to cover the spokes, and a lower rim (24) situated at a part of the outer periphery;
and
a concealer (9, 24) configured to conceal the interior of the airbag apparatus (10), the concealer being disposed at a gap formed between the outer periphery of the module cover (20) and a surface of at least one of the spokes;
**characterized in that**:
the module cover further comprises a leg piece (22) extending from a part of the outer periphery, and a projection (25) situated as a part of the outer periphery radially outside the leg piece (22) and having a length less than that of the leg piece (22) and the sterring wheel further comprises a back cover (5) covering a back side of the steering wheel and having a portion disposed outside the leg piece (22) adjacent the projection (25) to thereby cover the leg piece (22) by the projection (25) and the portion of the back cover (5) outside the leg piece (22).

2. A steering wheel according to claim 1, wherein:
the concealer (9, 24) for concealing the interior of the airbag apparatus is provided at a gap between the outer periphery of the module cover and the surface of a downward spoke (3D) of the steering wheel when the steering wheel is in the position at which a vehicle drives straight ahead, and
wherein the concealer is constructed of a projecting strip (9) provided at the surface of the downward spoke adjacent to the occupant and an outer rim (24) of the module cover disposed close to the side of the projecting strip adjacent to the outer periphery of the steering wheel.

3. A steering wheel according to claims 1 or 2, wherein:
the module cover (20) is connected to the airbag apparatus and moveable in the front-back direction for operating a horn switch, the outer periphery of the module cover of the airbag apparatus covers proximal ends of the spokes adjacent to the steering column,
the concealer (9, 24) for concealing the interior of the airbag apparatus is provided at a gap between a first portion of the outer periphery of the module cover and a radial surface of the downward spoke (3D) adjacent to an occupant, said radial surface extending perpendicular to the axis of the steering column,
the concealer is constructed of a projecting strip (9) provided at the radial surface of the downward spoke adjacent to the occupant and an outer rim (24) of the module cover disposed close to the side of the projecting strip adjacent to the outer periphery of the steering wheel, and
a leg like piece (22) erects from the back of the main surface (21) at a second portion of the outer periphery opposite to the first portion.

## Patentansprüche

1. Lenkradanordnung mit:
einem Lenkrad (1) mit mehreren Speichen (3L, 3R, 3D);
einer Airbagvorrichtung (10), die im Wesentlichen mittig zum im Lenkrad angeordnet ist und einen Innenraum und ein Modulgehäuse (20) aufweist, wobei das Modulgehäuse eine Hauptfläche (21), einen um die Hauptfläche (21) herum angeordneten äußeren Randbereich zum Abdecken der Speichen und einen unteren Rand (24) an einem Teil des äußeren Randereiches aufweist; und
einer Abdeckung (9, 24), die zum Verbergen des Innenraums der Airbagvorrichtung (10) an einer Lücke zwischen dem äußeren Randbereich des Modulgehäuses (20) und einer Fläche mindestens einer der Speichen vorgesehen ist,
**dadurch gekennzeichnet,**
**dass** das Modulgehäuse ferner einen Schenkel (22), der sich von einem Teil des äußeren Randbereiches aus erstreckt, und einen Ansatz (25) aufweist, der als ein Teil des äußeren Randbereiches radial außerhalb des Schenkels (22) liegt und dessen Länge kleiner als die des Schenkels (22) ist, und
**dass** das Lenkrad ferner einen Rückendeckel (5) zum Überdecken einer Rückseite des Lenkrades und einen Abschnitt aufweist, der außerhalb des Schenkels (22) an den Ansatz (25) angrenzend zum Überdecken des Schenkels (22) durch den Ansatz (25) und des außerhalb des Schenkels (22) liegenden Abschnitts des Rückendeckels (5) angeordnet ist.

2. Lenkrad nach Anspruch 1, wobei:
die Abdeckung (9, 24) zum Verbergen des Innenraums der Airbagvorrichtung an einer Lücke zwischen dem äußeren Randbereich des Modulgehäuses und der Fläche einer Speiche (3D) vorgesehen ist, die bei Geradeausfahrt des Fahrzeuges nach unten weist, und
wobei die Abdeckung aus einem vorstehenden Steg (9) an der Fläche der benachbart zum Insassen nach unten weisenden Speiche und aus einem äußeren Rand (24) des Modulgehäuses nahe der dem äußeren Randbereich des Lenkrades benachbarten Seite des vorstehenden Steges gebildet ist.

3. Lenkrad nach Anspruch 1 oder 2, wobei:
das Modulgehäuse (20) mit der Airbagvorrichtung verbunden und zur Betätigung eines Hupenschalters in Vorwärts- und Rückwärtsrichtung bewegbar ist, der äußere Randbereich des Modulgehäuses der Airbagvorrichtung proximale Enden der an die Lenksäule angrenzenden Speichen überdeckt,
die Abdeckung (9, 24) zum Verbergen des Innenraums der Airbagvorrichtung an einer Lücke zwischen einem ersten Abschnitt des äußeren Randbereiches des Modulgehäuses und einer radialen Fläche der benachbart zum Insassen nach unten weisenden Speiche (3D) vorgesehen ist, wobei die radiale Fläche sich senkrecht zur Achse der Lenksäule erstreckt,
die Abdeckung aus einem vorstehenden Steg (9) an der radialen Fläche der benachbart zum Insassen nach unten weisenden Speiche und aus einem äußeren Rand (24) des Modulgehäuses nahe der dem äußeren Randbereich des Lenkrades benachbarten Seite des vorstehenden Steges gebildet ist, und
ein schenkelartiges Teil (22) von der Rückseite der Hauptfläche (21) an einem zweiten Abschnitt des äußeren Randbereiches vorsteht, der dem ersten Abschnitt gegenüber liegt.

## Revendications

1. Dispositif de volant comprenant:
un volant (1) avec une pluralité de rayons (3L, 3R, 3D) ;
un dispositif de coussin gonflable (10) disposé essentiellement central par rapport au volant et incluant un intérieur et un couvercle de module (20), ledit couvercle de module comprenant une surface principale (21), une périphérie extérieure disposée autour de la surface principale (21) pour couvrir les rayons, et un rebord inférieur (24) situé sur une partie de la périphérie extérieure ; et
une coiffe (9, 24) configurée de manière à couvrir l'intérieur du dispositif de coussin gonflable (10), la coiffe étant disposée à une lacune formée entre la périphérie extérieure du couvercle de module (20) et une surface d'au moins un des rayons ;
**caractérisé en ce que :**
le couvercle de module comprend en outre une branche (22) s'étendant d'une partie de la périphérie extérieure, et une projection (25) située comme une partie de la périphérie extérieure radialement à l'extérieur de la branche (22) and étant moins longue que la branche (22) et
le volant comprend en outre un couvercle arrière (5) couvrant un côté arrière du volant et ayant une portion disposée à l'extérieur de la branche (22) adjacente de la projection (25) pour couvrir par cela la branche (22) par la projection (25) et la portion du couvercle arrière (5) à l'extérieur de la branche (22).

2. Volant selon la revendication 1, dans lequel
la coiffe (9, 24) pour couvrir l'intérieur du dispositif de coussin gonflable est prévue à une lacune entre la périphérie extérieure du couvercle de module et la surface d'un rayon dirigé vers le bas (3D) du volant quand le volant est dans la position dans laquelle une véhicule avance tout droit, et
dans lequel la coiffe est construite d'une traverse saillissante (9) prévue à la surface du rayon dirigé vers le bas adjacent de l'occupant et un rebord extérieur (24) du couvercle de module disposé proche du côté de la traverse saillissante adjacente à la périphérie extérieure du volant.

3. Volant selon les revendications 1 ou 2, dans lequel :
le couvercle de module (20) est connecté au dispositif de coussin gonflable et mobile dans la direction en avant et an arrière pour actionner le commutateur de klaxon, la périphérie extérieure du couvercle de module du dispositif de coussin gonflable couvre des extrémités proximales des rayons adjacents à la colonne de direction,
la coiffe (9, 24) pour couvrir l'intérieur du dispositif de coussin gonflable est prévue à une lacune entre une première portion de la périphérie extérieure du couvercle de module et une surface radiale du rayon dirigé vers le bas (3D) adjacent à un occupant, ladite surface radiale s'étendant perpendiculairement à l'axe de la colonne de direction,
la coiffe est construite d'une traverse saillissante (9) prévue à la surface radiale du rayon dirigeant vers le bas adjacent de l'occupant et un rebord extérieur (24) du couvercle de module disposé proche du côté de la traverse saillissante adjacente à la périphérie extérieure du volant, et
une pièce de type branche (22) émerge de l'arrière de la surface principale (21) à une seconde portion de la périphérie extérieure vis-à-vis de la première portion.
